# EUROPEAN PATENT SPECIFICATION

(11) **EP 4 231 569 B1**
(45) Date of publication and mention of the grant of the patent: **04.11.2026**
(21) Application number: 21879315.6
(22) Date of filing: 11.10.2021
(51) Int. Cl.: H04L 1/1867, H04L 1/1829, H04L 5/00

(54) **INFORMATION DETERMINATION METHOD AND APPARATUS, DEVICE, AND STORAGE MEDIUM**
INFORMATIONSBESTIMMUNGSVERFAHREN UND -VORRICHTUNG, VORRICHTUNG UND SPEICHERMEDIUM
PROCÉDÉ ET APPAREIL DE DÉTERMINATION D' INFORMATIONS, DISPOSITIF, ET SUPPORT DE STOCKAGE

(30) Priority: 14.10.2020 CN 202011098118
(43) Date of publication of application: 23.08.2023
(73) Proprietor: ZTE Corporation, Shenzhen, Guangdong 518057 (CN)
(72) Inventor: YANG, Weiwei, Shenzhen, Guangdong 518057 (CN); DAI, Bo, Shenzhen, Guangdong 518057 (CN)
(74) Representative: Aipex B.V.
(86) International application number: PCT/CN2021/122949
(87) International publication number: WO 2022/078270

(56) References cited:
- EP-A1- 3 301 850
- WO-A1-2017/123275
- WO-A1-2018/145074
- CN-A- 110 830 184
- CN-A- 112 511 280
- US-A1- 2018 255 542
- QUALCOMM INCORPORATED: "Support of 14 HARQ processes and scheduling delay", vol. RAN WG1, no. e-Meeting; 20200817 - 20200828, 8 August 2020 (2020-08-08), XP051917914, Retrieved from the Internet <URL:https://ftp.3gpp.org/tsg_ran/WG1_RL1/TSGR1_102-e/Docs/R1-2006193.zip R1-2006193 Support of 14 HARQ processes and scheduling delay.docx> [retrieved on 20200808]
- QUALCOMM INCORPORATED: "Support of 14 HARQ processes and scheduling delay", 3GPP DRAFT; R1-2006193, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200817 - 20200828, 8 August 2020 (2020-08-08), Mobile Competence Centre ; 650, route des Lucioles ; F-06921 Sophia-Antipolis Cedex ; France , XP051917914
- QUALCOMM INCORPORATED, ORANGE, SIERRA WIRELESS, VERIZON, ERICSSON, SEQUANS, NOKIA, NOKIA SHANGHAI BELL: "Increased peak data rate for HD-FDD MTC UEs", 3GPP DRAFT; R1-1912694, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20191118 - 20191122, 9 November 2019 (2019-11-09), Mobile Competence Centre ; 650, route des Lucioles ; F-06921 Sophia-Antipolis Cedex ; France , XP051823549
- QUALCOMM INCORPORATED, ORANGE, SIERRA WIRELESS, VERIZON, ERICSSON: "Increased peak data rate for HD-FDD MTC UEs", 3GPP DRAFT; R1-1910735 INCREASED PEAK DATA RATE FOR HD-FDD MTC UES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Chongqing, PR China; 20191014 - 20191020, 5 October 2019 (2019-10-05), Mobile Competence Centre ; 650, route des Lucioles ; F-06921 Sophia-Antipolis Cedex ; France , XP051789522

## Description

### TECHNICAL FIELD

The present application relates to the field of communication technology, for example, an information determination method, a device, and a storage medium.

### BACKGROUND

In a machine-type communication (MTC) system in Release 17 (Rel-17), for a half-duplex terminal, 14 hybrid automatic repeat request (HARQ) processes need to be supported in downlink, aiming at improving a downlink peak rate and being suitable for more scenarios. However, no indication mode has been given for a physical downlink shared channel (PDSCH) scheduling delay.

EP 3 301 850 A1 relates to a method of wireless communication using half dulplex frequency division duplex.

### SUMMARY

The present application provides an information determination method, a device, and a storage medium to achieve the determination of a PDSCH scheduling delay and further the determination of the PDSCH.

The present application is set out in the appended sets of claims.

### BRIEF DESCRIPTION OF DRAWINGS

FIG. 1 is a structure diagram of a half duplex-frequency division duplex (HD-FDD) user equipment (UE) supporting 10 HARQ processes according to an embodiment of the present application;
FIG. 2 is a schematic diagram of a scenario where invalid subframes exist when an HD-FDD UE supports 14 HARQ processes according to an embodiment of the present application;
FIG. 3 is a flowchart of an information determination method according to an embodiment of the present application;
FIG. 4 is a diagram illustrating information determination according to an embodiment of the present application;
FIG. 5 is a diagram illustrating information determination according to an embodiment of the present application;
FIG. 6 is a structure diagram of an information determination apparatus according to an embodiment of the present application; and
FIG. 7 is a structure diagram of a device according to an embodiment of the present application.

### DETAILED DESCRIPTION

Embodiments of the present application are described below in conjunction with drawings.

The steps illustrated in the flowcharts among the drawings may be performed by, for example, a computer system capable of executing a set of computer-executable instructions. Moreover, although logical sequences are illustrated in the flowcharts, in some cases, the illustrated or described steps may be performed in sequences different from those described herein.

The technical schemes of the present application can be applied to various communication systems such as a global system for mobile communication (GSM) system, a code-division multiple access (CDMA) system, a wideband code division multiple access (WCDMA) system, a general packet radio service (GPRS) system, a long term evolution (LTE) system, an advanced long term evolution (LTE-A) system, a universal mobile telecommunication system (UMTS) and a 5th generation wireless system (5G), and the communication system is not limited to the embodiments of the present application. In the present application, the 5G system is used as an example for description.

The embodiments of the present application may be applied to wireless networks of different standards. A radio access network may include different communication nodes in different systems. The radio network system includes an evolved NodeB/next-generation NodeB (eNB/gNB) and multiple user equipments (UE1 and UE2). A base station performs wireless communications with the multiple user equipments, respectively, and the multiple user equipments also perform wireless communications with each other.

In the embodiments of the present application, the base station may be a device capable of communicating with a user terminal. The base station may be any device having a radio transceiving function. The base station includes, but is not limited to, a base station (NodeB), an evolved NodeB (eNodeB), a base station in a 5G communication system, a base station in a future communication system, an access node in a wireless fidelity (Wi-Fi) system, a wireless relay node, a wireless backhaul node, and so on. The base station may also be a radio controller in a cloud radio access network (CRAN) scenario. The base station may also be a small cell and a transmission receive point (TRP). The base station is not limited to the embodiments of the present application. In the present application, the 5G base station is used as an example for description.

In the embodiments of the present application, the user terminal is a device having a wireless transceiving function. The user terminal may be deployed on land, for example, the UE may be an indoor device, an outdoor device, a hand-held device, a wearable device and a vehicle-mounted device. The user terminal may also be deployed on the water (for example, on a ship), and may also be deployed in the air (for example, on an airplane, a balloon and a satellite). The user terminal may be a mobile phone, a pad, a computer having a wireless transceiving function, a virtual reality (VR) terminal, an augmented reality (AR) terminal, a wireless terminal for industrial control, a wireless terminal for self driving, a wireless terminal for remote medical, a wireless terminal for smart grid, a wireless terminal for transportation safety, a wireless terminal for a smart city and a wireless terminal for a smart home. Application scenarios are not limited in the embodiments of the present application. The user terminal may also sometimes be referred to as a terminal, an access terminal, a UE unit, a UE station, a mobile station, a mobile, a remote station, a remote terminal, a mobile device, a UE terminal, a wireless communication device, a UE agent or a UE device, etc. The user terminal is not limited to the embodiments of the present application.

The related technologies involved in the embodiments of the application are briefly described below.

Machine-type communications (MTC), also known as machine to machine (M2M), are the main application form of the Internet of things. MTC devices deployed on the market are primarily based on the GSM system. Due to the high spectral efficiency of LTE/LTE-A, more and more mobile operators select the LTE/LTE-A as an evolution direction of the future broadband wireless communication system. Various LTE/LTE-A-based MTC data services will also be more attractive.

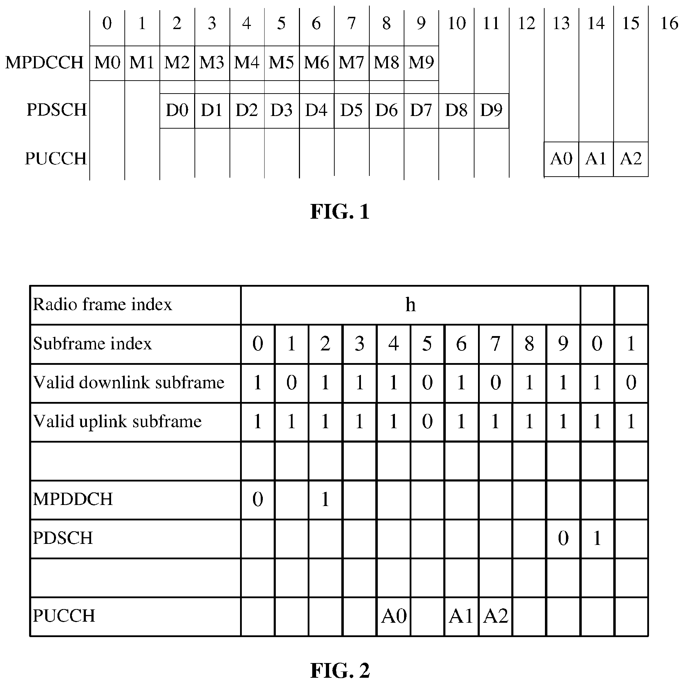

An HD-FDD UE supports the maximum of 10 HARQ processes, as shown in FIG. 1.

As can be seen from FIG. 1, the scheduling delay between the MPDCCH and the PDSCH is fixed to 2, and a hybrid automatic repeat request acknowledgement (HARQ-ACK) feedback delay is shown in Table 1.

**Table 1**

| 'HARQ-ACK delay' field in DCI | Value of HARQ-ACK delay when *'HARQACKDelayType ' is set to 0* | Value of HARQ-ACK delay when *'HARQACKDelayType ' is set to 1* |
|---|---|---|
| 000 | 4 | 4 |
| 001 | 5 | 5 |
| 010 | 7 | 6 |
| 011 | 9 | 7 |
| 100 | 11 | 8 |
| 101 | 13 | 9 |
| 110 | 15 | 10 |
| 111 | 17 | 11 |

Which set of HARQ-ACK delays is selected through a configuration of the higher-layer signaling ce-SchedulingEnhancement, and then timing is performed through the HARQ-ACK delay control field in the DCI.

In an MTC system of Rel-17, for a half-duplex terminal, the downlink needs to support 14 HARQ processes, aiming at improving the downlink peak rate and being suitable for more scenarios. However, no indication mode has been given for the PDSCH scheduling delay, especially in scenarios where the invalid subframe exists.

As shown in FIG. 2, assuming that the DCI carried by MPDCCH0 indicates that the scheduling delay is 7, the UE cannot determine a subframe where corresponding PDSCHO is located according to the value of the scheduling delay, because the unit of the value of the scheduling delay is not known. If the unit of the value of the scheduling delay is the subframe, PDSCHO will be transmitted on subframe 7 of radio frame h. Since subframe 7 is an invalid downlink subframe, PDSCHO will be transmitted on subframe 8, but subframe 8 is an uplink-downlink switching subframe and cannot be used for transmitting the PDSCH. If the unit is the valid downlink subframe, PDSCHO will be transmitted on subframe 1 of radio frame h+1, and as a result, the PDSCH cannot be transmitted subsequently or transmission of the PDSCH is postponed, affecting the maximum downlink peak rate.

Compared with conventional communication systems, a new radio (NR) system has higher configuration flexibility and a wider bandwidth range, and accordingly, higher requirements are imposed on the capability of terminals so that the terminals need to spend a higher cost than before. However, not all of the various scenarios supported by the NR system require such high capabilities of the terminals, and such scenarios may be, for example, a smart wearable device and an industrial sensor. Therefore, low-configuration terminal device types are defined for such scenarios, such as a smaller bandwidth, fewer antennas, half-duplex FDD (HD-FDD), relaxed UE processing time and relaxed UE processing capabilities, thereby reducing a production cost and the complexity of the terminals. Such terminals may be referred to as low-configuration terminals or NR reduced capability (NR RedCap) user terminals.

For the UE processing capability, the standard defines the PDSCH processing time (N₁) and the PUSCH preparation time (N₂), where N₁ occupies the major part of the minimum time Tproc,1 between the PDSCH and the corresponding HARQ-ACK, and N₂ occupies the major part of the minimum time Tproc,2 between a physical downlink control channel (PDCCH) and a physical uplink shared channel (PUSCH). The corresponding N₁/N₂ values are different according to different UE capabilities. Table 2 and Table 3 show N₁ and N₂ corresponding to UE processing capability 1. For the RedCap UE, the processing time is further relaxed, that is, new N₁/N₂ are introduced, but the effect of the relaxed processing time on the timing in the HARQ process is not given.

**Table 2**

| *µ* | PDSCH processing time N₁ [Unit: symbol] | |
|---|---|---|
| | Only front-loaded demodulation reference signal | Configuring an extra demodulation reference signal or no higher-layer signaling configuration |
| 0 | 8 | 13 or 14, depending on the location of the extra reference signal |
| 1 | 10 | 13 |
| 2 | 17 | 20 |
| 3 | 20 | 24 |

**Table 3**

| *µ* | PUSCH preparation N₂ [Unit: symbol] |
|---|---|
| 0 | 10 |
| 1 | 12 |
| 2 | 23 |
| 3 | 36 |

In an embodiment, the embodiments of the present application provide an information determination method. The information determination method is suitable for the case of determining a PDSCH scheduling delay. The information determination method may be performed by an information determination apparatus, and the information determination apparatus may be implemented by software and/or hardware. The method is applied to a first node.

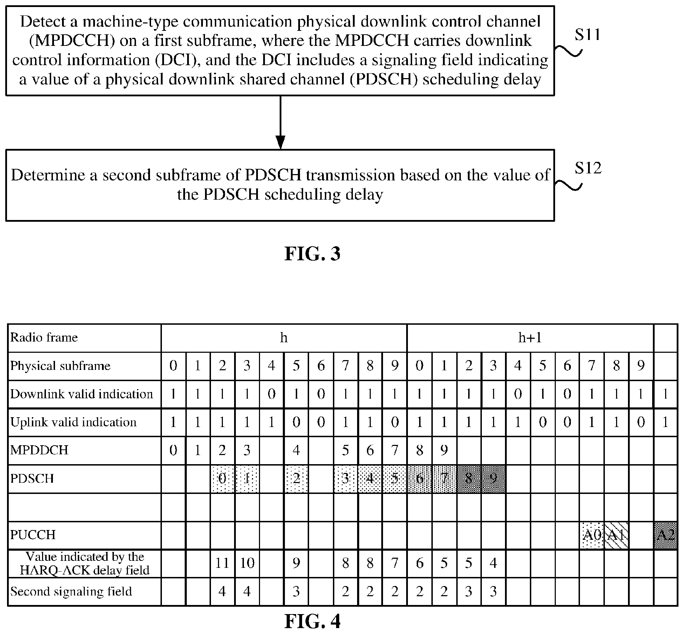

As shown in FIG. 3, the information determination method provided by the embodiments of the present application mainly includes steps S11 and S12.

In S11, an MPDCCH is detected on a first subframe, where the MPDCCH carries DCI, and the DCI includes a signaling field indicating a value of the PDSCH scheduling delay.

In S12, a second subframe of PDSCH transmission is determined based on the value of the PDSCH scheduling delay.

The first node may be any terminal provided above.

In an embodiment, the value of the PDSCH scheduling delay includes a first value and a second value, where the second value includes a first unit and a second unit.

In this embodiment, the first value may be the value of a PDSCH scheduling delay, and the second value may be understood as the unit of the PDSCH scheduling delay. The unit may be subframes or may be specified as other units.

After the second subframe of the PDSCH transmission is determined, the method further includes that the PDSCH is received on the second subframe.

In an embodiment, the second subframe of the PDSCH transmission is determined based on the value of the PDSCH scheduling delay in one or more of the following manners.

If the MPDCCH is detected on a third subframe, the second subframe of the PDSCH transmission is determined according to the first unit corresponding to the value of the PDSCH scheduling delay; or if the MPDCCH is not detected on the third subframe, the second subframe of the PDSCH transmission is determined according to the second unit corresponding to the value of the PDSCH scheduling delay; where the third subframe is the first valid downlink subframe after the first subframe.

A terminal detects an MPDCCH on subframe n, if the terminal also detects the MPDCCH on subframe n+k, the terminal determines the subframe where the PDSCH transmission corresponding to the MPDCCH on the subframe n is located according to the first unit corresponding to the scheduling delay, or if the terminal does not detect the MPDCCH on subframe n+k, the terminal determines the subframe where the PDSCH transmission is located according to the second unit corresponding to the value of the PDSCH scheduling delay, where subframe n+k is the first valid downlink subframe after subframe n.

The subframe where the PDSCH transmission is located is the second subframe.

In an embodiment, the second subframe of the PDSCH transmission is determined based on the value of the PDSCH scheduling delay in one or more of the following manners.

If the number of valid downlink subframes between the first subframe and a fourth subframe is the first number, the second subframe of the PDSCH transmission is determined according to the first unit corresponding to the value of the PDSCH scheduling delay; or if the number of valid downlink subframes between the first subframe and the fourth subframe is the second number, the second subframe of the PDSCH transmission is determined according to the second unit corresponding to the value of the PDSCH scheduling delay; where the fourth subframe is the 1^{st} downlink-to-uplink transition subframe after the first subframe.

In this embodiment, the first number may be pre-configured according to actual conditions, the first number may be 1, and the second number may be 0.

If the number of valid downlink subframes between subframe n and subframe n+r is b1, the terminal determines the subframe where the PDSCH transmission is located according to the first unit corresponding to the value of the PDSCH scheduling delay, where subframe n+r is the 1^{st} downlink-to-uplink transition subframe after subframe n, and b1 may be 1.

If the number of valid downlink subframes between subframe n and subframe n+r is b2, the terminal determines the subframe where the PDSCH transmission is located according to the second unit corresponding to the value of the PDSCH scheduling delay, where subframe n+r is the 1^{st} downlink-to-uplink transition subframe after subframe n, and b2 may be 0.

In an embodiment, the second subframe of the PDSCH transmission is determined based on the value of the PDSCH scheduling delay in one or more of the following manners.

If the number of valid downlink subframes between the first subframe and the fourth subframe is greater than or equal to the first number, the second subframe of the PDSCH transmission is determined according to the first unit corresponding to the value of the scheduling delay; or if the number of valid downlink subframes between the first subframe and the fourth subframe is less than the first number, the second subframe of the PDSCH transmission is determined according to the second unit corresponding to the value of the scheduling delay; where the fourth subframe is the 1^{st} downlink-to-uplink transition subframe after the first subframe.

In this embodiment, the first number may be pre-configured according to actual conditions, and the first number may be 1.

If the number of valid downlink subframes between subframe n and subframe n+r is b1 and b1 is greater than or equal to 1, the terminal determines the subframe where the PDSCH transmission is located according to the first unit corresponding to the value of the PDSCH scheduling delay, where subframe n+r is the 1^{st} downlink-to-uplink transition subframe after subframe n, and b1 may be 1.

If the number of valid downlink subframes between subframe n and subframe n+r is b1 and b1 is less than 0, the terminal determines the subframe where the PDSCH transmission is located according to the first unit corresponding to the value of the PDSCH scheduling delay, where subframe n+r is the 1^{st} downlink-to-uplink transition subframe after subframe n.

In an embodiment, the second subframe of the PDSCH transmission is determined based on the value of the PDSCH scheduling delay in one or more of the following manners.

When an HARQ process index indicated in the DCI is a first predefined value, the second subframe of the PDSCH transmission is determined according to the first unit corresponding to the value of the PDSCH scheduling delay; or when the HARQ process index indicated in the DCI is a second predefined value, the second subframe of the PDSCH transmission is determined according to the second unit corresponding to the value of the PDSCH scheduling delay; where the first predefined value is an odd number or a specific process index, and the second predefined value is an even number or another specific process index.

When the HARQ process index indicated in the DCI is an odd number or a specific process index, the terminal determines the subframe where the PDSCH transmission is located according to the first unit corresponding to the value of the PDSCH scheduling delay; when the HARQ process index indicated in the DCI is an even number or another specific process index, the terminal determines the subframe where the PDSCH transmission is located according to the second unit corresponding to the value of the PDSCH scheduling delay; and vice versa.

In an embodiment, the second subframe of the PDSCH transmission is determined based on the value of the PDSCH scheduling delay in one or more of the following manners.

When a value of an HARQ-ACK delay indicated in the DCI is greater than or equal to a third number, the second subframe of the PDSCH transmission is determined according to the first unit corresponding to the value of the scheduling delay; or when the value of the HARQ-ACK delay indicated in the DCI is less than the third number, the second subframe of the PDSCH transmission is determined according to the second unit corresponding to the value of the scheduling delay; where the third number is a preset value or a higher-layer configured value.

When the value of the HARQ-ACK delay indicated in the DCI is greater than or equal to M, the terminal determines the subframe where the PDSCH transmission is located according to the first unit corresponding to the value of the PDSCH scheduling delay; or when the value of the HARQ-ACK delay indicated in the DCI is less than M, the terminal determines the subframe where the PDSCH transmission is located according to the second unit corresponding to the value of the PDSCH scheduling delay; where M is a preset value or a higher-layer configured value.

In an embodiment, the case where the DCI includes the signaling field indicating the value of the PDSCH scheduling delay includes that a first signaling field in the DCI indicates the value of the PDSCH scheduling delay, where the first signaling field is a signaling field indicating the number of PDSCH repetitions, or the first signaling field is a newly added signaling field.

In an embodiment, the case where the DCI includes the signaling field indicating the value of the PDSCH scheduling delay includes that the first signaling field in the DCI indicates the value of the PDSCH scheduling delay, where when 14 HARQ processes are configured, the first signaling field is 2 bits, and the signaling field indicating the number of PDSCH repetitions occupies 0 bit.

In an embodiment, the DCI further includes one or more signaling fields indicating a value of an HARQ-ACK feedback delay; and the method further includes that a fifth subframe for transmitting HARQ-ACK response information is determined based on the value of the HARQ-ACK feedback delay.

The terminal transmits the HARQ-ACK response information on the fifth subframe according to the PDSCH reception condition.

In an embodiment, the value of the HARQ-ACK feedback delay is determined through an HARQ-ACK feedback delay signaling field and a second signaling field in the DCI.

The value of the HARQ-ACK feedback delay is determined through k1 indicated by the HARQ-ACK delay indication field and k2 indicated by the second signaling field in the DCI, that is, a UE receives the PDSCH on subframe m and transmits HARQ-ACK response information on subframe m+k1+k2.

In an embodiment, the second signaling field is used for indicating the number of invalid subframes between a PDSCH and a corresponding HARQ; or the second signaling field is used for indicating a predetermined value; or the second signaling field is used for indicating a value configured by higher-layer signaling.

The second signaling field may be a signaling field indicating the number of PDSCH repetitions or may be an additional signaling field.

When 14-HARQ processes are configured, the second signaling field is 2 bits, and the signaling field indicating the number of PDSCH repetitions occupies 0 bit.

In an embodiment, the value of the PDSCH scheduling delay and the value of the HARQ-ACK feedback delay are determined through a PDSCH repetition number signaling field and an HARQ-ACK feedback delay signaling field in the DCI.

In an embodiment, the value of the PDSCH scheduling delay and the value of the HARQ-ACK feedback delay are determined through a third signaling field and an HARQ-ACK feedback delay signaling field in the DCI, where when the third signaling field exists, the signaling field for indicating the number of PDSCH repetitions occupies 0 bit.

In an embodiment, the fifth subframe is the 1^{st} valid uplink subframe after the second subframe, a fourth number of valid downlink subframes, a fifth number of physical subframes and a sixth number of valid uplink subframes.

In an embodiment, the fourth number and the sixth number are determined through one or more signaling fields in the DCI, and the fifth number is a preset value.

In an embodiment, the value of the PDSCH scheduling delay, the fourth number and the sixth number are determined through one signaling field in the DCI, and the fifth number is a preset value.

In an embodiment, the fifth subframe is a seventh-number^{th} valid uplink subframe after the second subframe, a fourth number of valid downlink subframes and a fifth number of physical subframes.

In an embodiment, the fourth number and the seventh number are determined through one or more signaling fields in the DCI, and the seventh number is a preset value.

In an embodiment, the value of the PDSCH scheduling delay, the fourth number and the seventh number are determined through one signaling field in the DCI, and the seventh number is a preset value.

In an embodiment, the second subframe determined according to the first unit corresponding to the value of the PDSCH scheduling delay includes: the 2^{nd} physical subframe after the first subframe, two physical subframes and three valid uplink subframes; and the second subframe according to the second unit corresponding to the value of the PDSCH scheduling delay includes: the 3^{rd} physical subframe after the first subframe, one physical subframe and three valid uplink subframes.

In an embodiment, the second subframe determined according to the first unit corresponding to the value of the PDSCH scheduling delay includes: the 1^{st} valid downlink subframe after the first subframe, one valid downlink subframe, one physical subframe, three valid uplink subframes and one physical subframe; and the second subframe determined according to the second unit corresponding to the value of the PDSCH scheduling delay includes: the 2^{nd} valid downlink subframe after the first subframe, one physical subframe, three valid uplink subframes and one physical subframe.

In an example embodiment, a method for implicitly determining a PDSCH scheduling delay is provided.

The terminal detects an MPDCCH on subframe n, where the DCI indicates that the value of the PDSCH scheduling delay is 7, the terminal determines the subframe where the PDSCH transmission is located according to at least one of the following manners, and the terminal receives the PDSCH.

In manner one, if the terminal detects the MPDCCH on subframe n+k, the terminal determines the subframe where the PDSCH transmission is located according to the first unit corresponding to the value of the scheduling delay, where subframe n+k is the 1^{st} valid downlink subframe after subframe n.

In manner two, if the terminal does not detect the MPDCCH on subframe n+k, the terminal determines the subframe where the PDSCH transmission is located according to the second unit corresponding to the value of the scheduling delay, where subframe n+k is the 1^{st} valid downlink subframe after subframe n.

In manner three, if the number of valid downlink subframes between subframe n and subframe n+r is b1, the terminal determines the subframe where the PDSCH transmission is located according to the first unit corresponding to the value of the scheduling delay, where subframe n+r is the 1^{st} downlink-to-uplink transition subframe after subframe n, and b1 may be 1.

In manner four, if the number of valid downlink subframes between subframe n and subframe n+r is b2, the terminal determines the subframe where the PDSCH transmission is located according to the second unit corresponding to the value of the scheduling delay, where subframe n+r is the 1^{st} downlink-to-uplink transition subframe after subframe n, and b2 may be 0.

In manner five, when the HARQ process index indicated in the DCI is a first predefined value (an odd number or a specific process index), the terminal determines the subframe where the PDSCH transmission is located according to the first unit corresponding to the value of the scheduling delay; and when the HARQ process index indicated in the DCI is a second predefined value (an even number or another specific process index), the terminal determines the subframe where the PDSCH transmission is located according to the second unit corresponding to the value of the scheduling delay; and vice versa.

In manner six, when the value of the HARQ-ACK delay indicated in the DCI is greater than or equal to M, the terminal determines the subframe where the PDSCH transmission is located according to the first unit corresponding to the value of the scheduling delay; and when the value of the HARQ-ACK delay indicated in the DCI is less than M, the terminal determines the subframe where the PDSCH transmission is located according to the second unit corresponding to the value of the scheduling delay; where M is a preset value or a higher-layer configured value.

In manner seven, if the number of valid downlink subframes between subframe n and subframe n+r is greater than or equal to b3, the terminal determines the subframe where the PDSCH transmission is located according to the first unit corresponding to the value of the scheduling delay, where subframe n+r is the 1^{st} downlink-to-uplink transition subframe after subframe n.

In manner eight, if the number of valid downlink subframes between subframe n and subframe n+r is less than b3, the terminal determines the subframe where the PDSCH transmission is located according to the second unit corresponding to the value of the scheduling delay, where subframe n+r is the 1^{st} downlink-to-uplink transition subframe after subframe n.

The first unit corresponding to the scheduling delay is one valid downlink subframe, one physical subframe, three valid uplink subframes, one physical subframe and one valid downlink subframe, and the second unit is one physical subframe, three valid uplink subframes, one physical subframe and two valid downlink subframes.

The first unit corresponding to the scheduling delay represents that the terminal detects the MPDCCH on subframe n and then transmits the PDSCH on the 1^{st} valid downlink subframe after one valid downlink subframe, one physical subframe, three valid uplink subframes and one physical subframe after subframe n, and the second unit represents that the terminal detects the MPDCCH on subframe n and then transmits the PDSCH on the 2^{nd} valid downlink subframe after one physical subframe, three valid uplink subframes and one physical subframe after the subframe n.

Alternatively, the first unit corresponding to the scheduling delay is two physical subframes, three valid uplink subframes and two physical subframes, and the second unit is one physical subframe, three valid uplink subframes and three physical subframes.

The first unit corresponding to the scheduling delay represents that the terminal detects the MPDCCH on subframe n and then transmits the PDSCH on the 2^{nd} physical subframe after two physical subframes and three valid uplink subframes after subframe n, and the second unit represents that the terminal detects the MPDCCH on subframe n and then transmits the PDSCH on 3^{rd} physical subframe after one physical subframe and three valid uplink subframes after subframe n.

In an example embodiment, a method for explicitly determining the PDSCH scheduling delay is provided.

The terminal detects an MPDCCH on subframe n, the terminal determines the subframe where the PDSCH transmission is located according to a value of the scheduling delay indicated in the DCI, and the terminal receives the PDSCH.

The value of the PDSCH scheduling delay is indicated by a first signaling field of 2 bits in the DCI, as shown in Table 4.

**Table 4**

| First signaling field | Value of PDSCH scheduling delay |
|---|---|
| 00 | 2 |
| 01 | 7 (First unit) |
| 10 | 7 (Second unit) |
| 11 | Reserved |

The first signaling field of 2 bits may be a signaling field indicating the number of PDSCH repetitions or may be an additional signaling field. Alternatively, when 14-HARQ processes are configured, the first signaling field is 2 bits, and the signaling field indicating the number of PDSCH repetitions occupies 0 bit.

In an example embodiment, a method for explicitly determining a value of an HARQ-ACK delay is provided.

The terminal receives a PDSCH on subframe m, the terminal determines the subframe where the HARQ-ACK corresponding to the PDSCH is located according to a value of an HARQ-ACK feedback delay indicated in the DCI; and the terminal transmits the HARQ-ACK according to the PDSCH reception condition.

The value of the HARQ-ACK feedback delay is determined through k1 indicated by the HARQ-ACK delay indication field and k2 indicated by the second signaling field in the DCI, that is, the UE receives the PDSCH on subframe m and transmits the HARQ-ACK on subframe m+k1+k2.

The second signaling field indicates the number of invalid subframes between the PDSCH and the corresponding HARQ. The terminal determines the value of k2 according to an uplink-downlink invalid subframe configuration and a value indicated by the second signaling field, and assuming that the second signaling field is 2 bits, the meaning for the second signaling field is shown in Table 5.

**Table 5**

| Second signaling field | Value of k2 |
|---|---|
| 00 | 0/4 |
| 01 | 1/5 |
| 10 | 2/6 |
| 11 | 3/7 |

The second signaling field may be a signaling field indicating the number of PDSCH repetitions or may be an additional signaling field; or when 14-HARQ processes are configured, the second signaling field is 2 bits, and the signaling field indicating the number of PDSCH repetitions occupies 0 bit.

In an embodiment, as shown in FIG. 4, the terminal obtains an attribute of a subframe through downlink valid indication signaling and uplink valid indication signaling configured by a higher layer. That is, when the value indicated by the downlink valid indication is 1, the subframe is a valid downlink subframe, and when the value indicated by the downlink valid indication is 0, the subframe is an invalid downlink subframe; and the uplink valid indication has the same meaning. Assuming that the UE receives PDSCHO on subframe 2 of radio frame h, the HARQ-ACK delay indication field in the corresponding DCI indicates that k1 is equal to 11, and the second signaling field is 00. Since the UE may obtain the configuration of the invalid subframe, the UE determines that k2 is equal to 4, and then the UE transmits the corresponding HARQ-ACK on subframe 7 of radio frame h+1.

In an example embodiment, a method for explicitly determining a value of an HARQ-ACK delay is provided.

The terminal receives a PDSCH on subframe m, the terminal determines the subframe where the HARQ-ACK corresponding to the PDSCH is located according to a value of an HARQ-ACK feedback delay indicated in the DCI; and the terminal transmits the HARQ-ACK according to the PDSCH reception condition.

The value of the HARQ-ACK feedback delay is determined through k1 indicated by the HARQ-ACK delay indication field and k2 indicated by the second signaling field in the DCI, that is, the UE receives the PDSCH on subframe m and transmits the HARQ-ACK on subframe m+k1+k2.

The second signaling field may be a signaling field indicating the number of PDSCH repetitions or may be an additional signaling field; or when 14-HARQ processes are configured, the first signaling field is 2 bits, and the signaling field indicating the number of PDSCH repetitions occupies 0 bit.

For example, the second signaling field is 3 bits as shown in Table 6.

**Table 6**

| Second signaling field | Value of k2 |
|---|---|
| 000 | 0 |
| 001 | 1 |
| 010 | 2 |
| 011 | 3 |
| 100 | 4 |
| 101 | 5 |
| 110 | 6 |
| 111 | 7 |

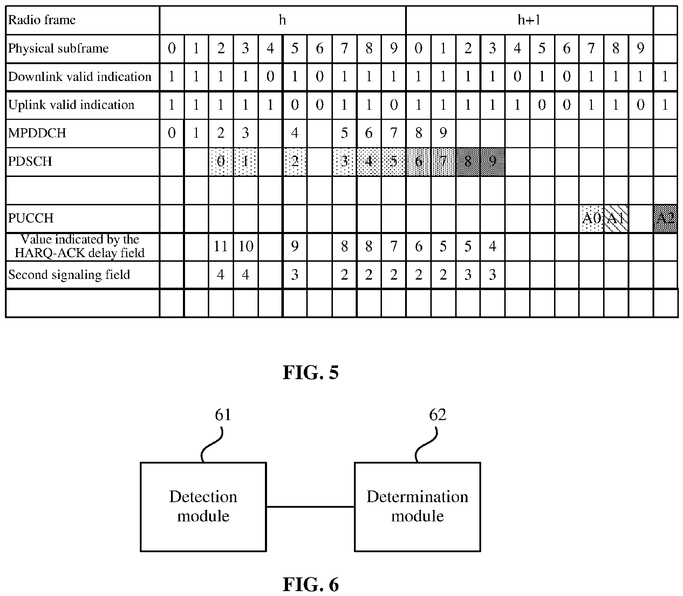

In an embodiment, as shown in FIG. 5, when the value indicated by the downlink valid indication is 1, the subframe is a valid downlink subframe, and when the value indicated by the downlink valid indication is 0, the subframe is an invalid downlink subframe; and the uplink valid indication has the same meaning. Assuming that the UE receives PDSCHO on subframe 2 of radio frame h, the HARQ-ACK delay indication field in the corresponding DCI indicates that k1 is equal to 11, and the second signaling field is 100, that is, k2 is equal to 4. The UE transmits the corresponding HARQ-ACK on subframe 7 of radio frame h+1.

In an example embodiment, a method of indicating the value of the PDSCH scheduling delay and the value of the HARQ-ACK feedback delay jointly by the DCI is provided.

The terminal detects an MPDCCH on subframe n, receives a PDSCH on subframe m according to a PDSCH scheduling delay indicated by the DCI, and determines the subframe where an HARQ-ACK corresponding to the PDSCH is located according to the value of the HARQ-ACK feedback delay indicated in the DCI; and the terminal transmits the HARQ-ACK according to the PDSCH reception condition.

The PDSCH scheduling delay and the HARQ-ACK feedback delay are determined through the PDSCH repetition number signaling field and an HARQ-ACK delay field in the DCI in the following manner.

When the value of the PDSCH repetition number signaling field is 00, the value of the PDSCH scheduling delay is 2, and the value of the HARQ-ACK feedback delay is determined according to the HARQ-ACK delay field; when the value of the PDSCH repetition number signaling field is 01, the value of the PDSCH scheduling delay is 7, and the value of the HARQ-ACK feedback delay is 12; when the value of the PDSCH repetition number signaling field is 10, the value of the PDSCH scheduling delay is 7, and the value of the HARQ-ACK feedback delay is 13; when the value of the PDSCH repetition number signaling field is **11,** it is a reserved state.

The PDSCH repetition number signaling field in this embodiment may also be a third signaling field, and at this point, the PDSCH repetition number signaling field occupies 0 bit.

In an example embodiment, a method of DCI jointly indicating the value of the PDSCH scheduling delay and the value of the HARQ-ACK feedback delay is provided.

The terminal detects an MPDCCH on subframe n, receives a PDSCH on subframe m according to a PDSCH scheduling delay indicated by the DCI, and determines the subframe where an HARQ-ACK corresponding to the PDSCH is located according to a value of an HARQ-ACK feedback delay indicated in the DCI; and the terminal transmits the HARQ-ACK according to the PDSCH reception condition.

The PDSCH scheduling delay and the HARQ-ACK feedback delay are determined through the PDSCH repetition number field and the HARQ-ACK delay field in the DCI in the following manner.

When the value of the PDSCH repetition number field is 00, the value of the PDSCH scheduling delay is 2, and the value of the HARQ-ACK feedback delay is determined according to the HARQ-ACK delay field; when the value of the PDSCH repetition number field is 01 and a g^{th} bit in the HARQ-ACK feedback delay field is 1, the value of the PDSCH scheduling delay is 7 and corresponds to the first unit, and the value of the HARQ-ACK feedback delay is 12; when the value of the PDSCH repetition number field is 01 and the g^{th} bit in the HARQ-ACK feedback delay field is 0, the value of the PDSCH scheduling delay is 7 and corresponds to the second unit, and the value of the HARQ-ACK feedback delay is 12; when the value of the PDSCH repetition number field is 10 and the g^{th} bit in the HARQ-ACK feedback delay field is 1, the value of the PDSCH scheduling delay is 7 and corresponds to the first unit, and the value of the HARQ-ACK feedback delay is 13; when the value of the PDSCH repetition number field is 10 and the g^{th} bit in the HARQ-ACK feedback delay field is 0, the value of the PDSCH scheduling delay is 7 and corresponds to the second unit, and the value of the HARQ-ACK feedback delay is 13; and when the value of the PDSCH repetition number field is 11, it is a reserved state. The PDSCH repetition number field in this embodiment may also be a third signaling field, and at this point, the PDSCH repetition number field occupies 0 bit. In this embodiment, g is predetermined.

In an embodiment, the terminal detects an MPDCCH on subframe n, receives a PDSCH on subframe m according to a PDSCH scheduling delay indicated by DCI, and determines the subframe where an HARQ-ACK corresponding to the PDSCH is located according to a value of the HARQ-ACK feedback delay indicated in the DCI; and the terminal transmits the HARQ-ACK according to the PDSCH reception condition. It is assumed that g is equal to 1.

The value of the PDSCH repetition number field in the DCI is 01, and the value of the HARQ-ACK delay field is 1xx; then the terminal determines that the PDSCH scheduling delay is 7 and corresponds to the first unit, and that the value of the HARQ-ACK feedback delay is 12. The PDSCH repetition number signaling field in this embodiment may also be a third signaling field, and at this point, the PDSCH repetition number signaling field occupies 0 bit.

In an embodiment, the terminal detects an MPDCCH on subframe n, receives a PDSCH on subframe m according to a PDSCH scheduling delay indicated by DCI, and determines the subframe where an HARQ-ACK corresponding to the PDSCH is located according to the value of the HARQ-ACK feedback delay indicated in the DCI; and the terminal transmits the HARQ-ACK according to the PDSCH reception condition. It is assumed that g is equal to 1.

The value of the PDSCH repetition number field in the DCI is 10, and the value of the HARQ-ACK delay field is 0xx; then the terminal determines that the PDSCH scheduling delay is 7 and corresponds to the second unit, and that the value of the HARQ-ACK feedback delay is 13. The PDSCH repetition number signaling field in this embodiment may also be a third signaling field, and at this point, the PDSCH repetition number signaling field occupies 0 bit.

In an example embodiment, a method of DCI jointly indicating the value of the PDSCH scheduling delay and the value of the HARQ-ACK feedback delay is provided.

The terminal detects an MPDCCH on subframe n, receives a PDSCH on subframe m according to the PDSCH scheduling delay indicated by the DCI, and determines the subframe where an HARQ-ACK corresponding to the PDSCH is located according to the value of the HARQ-ACK feedback delay indicated in the DCI; and the terminal transmits the HARQ-ACK according to the PDSCH reception condition.

The PDSCH scheduling delay and the HARQ-ACK feedback delay are determined through the PDSCH repetition number signaling field and the HARQ-ACK delay field in the DCI, the PDSCH repetition number signaling field in this embodiment may also be a third signaling field, and at this point, the PDSCH repetition number signaling field occupies 0 bit. Table 7 is as follows.

**Table 7**

| PDSCH repetition number signaling field | HARQ-ACK delay field | PDSCH scheduling delay | HARQ feedback delay |
|---|---|---|---|
| 00 | 000 | 2 | 4 |
| | 001 | 2 | 5 |
| | 010 | 2 | 6 |
| | 011 | 2 | 7 |
| | 100 | 2 | 8 |
| | 101 | 2 | 9 |
| | 110 | 2 | 10 |
| | 111 | 2 | 11 |
| 01 | 000 | 7 | 12 |
| | 001 | 7 | 13 |
| Reserved | | | |

alternatively.

| PDSCH repetition number signaling field | HARQ-ACK delay field | PDSCH scheduling delay | HARQ feedback delay |
|---|---|---|---|
| 00 | 000 | 2 | 4 |
| | 001 | 2 | 5 |
| | 010 | 2 | 6 |
| | 011 | 2 | 7 |
| | 100 | 2 | 8 |
| | 101 | 2 | 9 |
| | 110 | 2 | 10 |
| | 111 | 2 | 11 |
| 01 | 000 | 7 (First unit) | 12 |
| | 001 | 7 (Second unit) | 12 |
| | 010 | 7 (First unit) | 13 |
| | 010 | 7 (Second unit) | 13 |
| Reserved | | | |

In an example embodiment, the terminal detects an MPDCCH on subframe n, receives a PDSCH on subframe m according to a PDSCH scheduling delay indicated by DCI, and determines the subframe where an HARQ-ACK corresponding to the PDSCH is located according to the value of the HARQ-ACK feedback delay and k2 indicated in the DCI; and the terminal transmits the HARQ-ACK according to the PDSCH reception condition.

The PDSCH scheduling delay, the HARQ-ACK feedback delay and k2 are determined through the PDSCH repetition number signaling field and the HARQ-ACK delay field in the DCI, the PDSCH repetition number signaling field in this embodiment may also be a third signaling field, and at this point, the PDSCH repetition number signaling field occupies 0 bit. Table 8 is as follows.

**Table 8**

| PDSCH repetition number signaling field | Delay field of HARQ-ACK | PDSCH scheduling delay | HARQ feedback delay | k2 |
|---|---|---|---|---|
| 00 | 000 | 2 | 4 | 0 |
| | 001 | 2 | 4 | d1 |
| | 010 | 2 | 5 | 0 |
| | 011 | 2 | 5 | d2 |
| | 100 | 2 | 6 | 0 |
| | 101 | 2 | 6 | d3 |
| | 110 | 2 | 7 | 0 |
| | 111 | 2 | 7 | d4 |
| 01 | 000 | 2 | 8 | 0 |
| | 001 | 2 | 8 | d5 |
| | 010 | 2 | 9 | 0 |
| | 011 | 2 | 9 | d6 |
| | 100 | 2 | 10 | 0 |
| | 101 | 2 | 10 | d7 |
| | 110 | 2 | 11 | 0 |
| | 111 | 2 | 11 | d8 |
| 10 | 000 | 7 (First unit) | 12 | 0 |
| | 001 | 7 (First unit) | 12 | d9 |
| | 010 | 7 (First unit) | 13 | 0 |
| | 011 | 7 (First unit) | 13 | d10 |
| | 100 | 7 (Second unit) | 12 | 0 |
| | 101 | 7 (Second unit) | 12 | d11 |
| | 110 | 7 (Second unit) | 13 | 0 |
| | 111 | 7 (Second unit) | 13 | d12 |
| Reserved | | | | |

In the above table, d0 to d12 are positive integers greater than 0 and may be preset or configured through higher-layer signaling.

In an example embodiment, the terminal receives a PDSCH in a second subframe and transmits corresponding HARQ-ACK response information on a fifth subframe according to the PDSCH reception condition, where the fifth subframe is the 1^{st} valid uplink subframe after the second subframe, n1 valid downlink subframes, n2 physical subframes and n3 valid uplink subframes, and n2 is a preset value.

n1 and n3 are indicated jointly by one control field in the DCI or by two control fields, respectively.

n1 ranges from 0 to 13, n3 ranges from 0 to 2, and the value of n2 is 1.

In an example embodiment, the terminal receives a PDSCH in the second subframe and transmits corresponding HARQ-ACK response information on the fifth subframe according to the PDSCH reception condition, where the fifth subframe is an n4^{th} valid uplink subframe after the second subframe, n1 valid downlink subframes and n2 physical subframes, and n2 is a preset value.

n1 and n4 are indicated jointly by one control field in the DCI or by two control fields, respectively.

n1 ranges from 0 to 13, n4 ranges from 1 to 3, and the value of n2 is 1.

In an example embodiment, the terminal detects the MPDCCH on subframe n, receives the PDSCH on subframe m and transmits corresponding HARQ-ACK response information on subframe s according to the PDSCH reception condition, where subframe s is the 1^{st} valid uplink subframe after n1 valid downlink subframes, n2 physical subframes and n3 valid uplink subframes after subframe m; and the terminal obtains values of the PDSCH scheduling delay, n1, n2 and n3 according to the value of the third indication field, where the value indicated by the third indication field ranges from 0 to 11.

In an embodiment, the values of the PDSCH scheduling delay, n1, n2 and n3 indicated by the third indication field are shown in Table 9.

**Table 9**

| Third indication field | PDSCH scheduling delay | HARQ feedback delay | | |
|---|---|---|---|---|
| | | n1 | n2 | n3 |
| 0 | 7 (First unit) | 11 | 1 | 0 |
| 1 | 7 (Second unit) | 10 | 1 | 0 |
| 2 | 2 | 9 | 1 | 0 |
| 3 | 2 | 8 | 1 | 0 |
| 4 | 2 | 7 | 1 | 1 |
| 5 | 2 | 6 | 1 | 1 |
| 6 | 2 | 5 | 1 | 1 |
| 7 | 2 | 4 | 1 | 1 |
| 8 | 2 | 3 | 1 | 2 |
| 9 | 2 | 2 | 1 | 2 |
| 10 | 2 | 1 | 1 | 2 |
| 11 | 2 | 0 | 1 | 2 |

In an embodiment, when the value T of the third indication field is less than 10, the value of the PDSCH scheduling delay is 2; when T is 10, the value of the PDSCH scheduling delay is 7 and corresponds to the first unit; and when T is 11, the value of the PDSCH scheduling delay is 7 and corresponds to the second unit.

When T is 0 to 3, n3 is 2; when T is 4 to 7, n3 is 1; and when T is 8 to 11, n3 is equal to 0, n1 is equal to T, and n2 is equal to 1.

In an example embodiment, the terminal detects the MPDCCH on subframe n, receives the PDSCH on subframe m and transmits corresponding HARQ-ACK response information on subframe s according to the PDSCH reception condition, where subframe s is an n4^{th} valid uplink subframe after n1 valid downlink subframes and n2 physical subframes after the subframe m; and the terminal obtains the values of the PDSCH scheduling delay, n1, n2 and n4 according to the value of a fourth indication field, where the value indicated by the fourth indication field ranges from 0 to 11.

In an embodiment, the values of the PDSCH scheduling delay, n1, n2 and n4 indicated by the fourth indication field are shown in Table 10.

**Table 10**

| Fourth indication field | PDSCH scheduling delay | HARQ feedback delay | | |
|---|---|---|---|---|
| | | n1 | n2 | n3 |
| 0 | 7 (First unit) | 11 | 1 | 1 |
| 1 | 7 (Second unit) | 10 | 1 | 1 |
| 2 | 2 | 9 | 1 | 1 |
| 3 | 2 | 8 | 1 | 1 |
| 4 | 2 | 7 | 1 | 2 |
| 5 | 2 | 6 | 1 | 2 |
| 6 | 2 | 5 | 1 | 2 |
| 7 | 2 | 4 | 1 | 2 |
| 8 | 2 | 3 | 1 | 3 |
| 9 | 2 | 2 | 1 | 3 |
| 10 | 2 | 1 | 1 | 3 |
| 11 | 2 | 0 | 1 | 3 |

The above table is an example, and other combinations are not excluded.

In an embodiment, when the value T of the fourth indication field is less than 10, the value of the PDSCH scheduling delay is 2; when T is 10, the value of the PDSCH scheduling delay is 7 and corresponds to the first unit; and when T is 11, the value of the PDSCH scheduling delay is 7 and corresponds to the second unit.

When T is 0 to 3, n4 is 2; when T is 4 to 7, n4 is 2; and when T is 8 to 11, n4 is equal to 1, n1 is equal to T, and n2 is equal to 1.

In an example embodiment, the terminal detects the MPDCCH on subframe n, receives the PDSCH on subframe m and transmits corresponding HARQ-ACK response information on subframe s according to the PDSCH reception condition, where subframe s is the 1^{st} valid uplink subframe after n5 valid downlink subframes, n6 physical subframes and n7 valid uplink subframes after the subframe m; and the terminal obtains values of the PDSCH scheduling delay, n5, n6 and n7 according to the value of the third indication field, where the value indicated by the third indication field ranges from 0 to 23.

In an embodiment, the values of the PDSCH scheduling delay, n5, n6 and n7 indicated by the third indication field are shown in Table 11.

**Table 11**

| Third indication field | PDSCH scheduling delay | HARQ feedback delay | | |
|---|---|---|---|---|
| | | n5 | n6 | n7 |
| 0 | 7 (First unit) | 11 | 1 | 0 |
| 1 | 7 (Second unit) | 10 | 1 | 0 |
| 2 | 2 | 9 | 1 | 0 |
| 3 | 2 | 8 | 1 | 0 |
| 4 | 2 | 7 | 1 | 1 |
| 5 | 2 | 6 | 1 | 1 |
| 6 | 2 | 5 | 1 | 1 |
| 7 | 2 | 4 | 1 | 1 |
| 8 | 2 | 3 | 1 | 2 |
| 9 | 2 | 2 | 1 | 2 |
| 10 | 2 | 1 | 1 | 2 |
| 11 | 2 | 0 | 1 | 2 |
| 12 | 7 (First unit) | 11 | 1 | 0 |
| 13 | 7 (Second unit) | 10 | 1 | 1 |
| 14 | 2 | 9 | 1 | 2 |
| 15 | 2 | 8 | 1 | 0 |
| 16 | 2 | 7 | 1 | 1 |
| 17 | 2 | 6 | 1 | 2 |
| 18 | 2 | 5 | 1 | 0 |
| 19 | 2 | 4 | 1 | 1 |
| 20 | 2 | 3 | 1 | 2 |
| 21 | 2 | 2 | 1 | 0 |
| 22 | 2 | 1 | 1 | 1 |
| 23 | 2 | 0 | 1 | 2 |

The above table is an example, and other combinations are not excluded.

In an embodiment, when the value T of the third indication field is 0 to 9 or is greater than 12 to 21, the value of the PDSCH scheduling delay is 2; when T is 10 or 22, the value of the PDSCH scheduling delay is 7 and corresponds to the first unit; and when T is 11 or 23, the value of the PDSCH scheduling delay is 7 and corresponds to the second unit.

When T is one of 0 to 3, 12, 15, 18 or 21, n7 is 2; when T is one of 4 to 7, 13, 16, 19 or 22, n7 is 1; and when T is one of 8 to 11, 14, 17, 20 or 23, n7 is equal to 0, n5 is equal to mod(T, 12), and n6 is equal to 1.

In an example embodiment, the terminal detects the MPDCCH on subframe n, receives the PDSCH on the subframe m and transmits corresponding HARQ-ACK response information on subframe s according to the PDSCH reception condition, where subframe s is an n8th valid uplink subframe transmission after n5 valid downlink subframes and n6 physical subframes after subframe m; and the terminal obtains values of the PDSCH scheduling delay, n5, n6 and n8 according to the value of a fourth indication field, where the value indicated by the fourth indication field ranges from 0 to 23.

In an embodiment, the values of the PDSCH scheduling delay, n5, n6 and n8 indicated by the fourth indication field are shown in Table 12.

**Table 12**

| Fourth indication field | PDSCH scheduling delay | HARQ feedback delay | | |
|---|---|---|---|---|
| | | n5 | n6 | n8 |
| 0 | 7 (First unit) | 11 | 1 | 1 |
| 1 | 7 (Second unit) | 10 | 1 | 1 |
| 2 | 2 | 9 | 1 | 1 |
| 3 | 2 | 8 | 1 | 1 |
| 4 | 2 | 7 | 1 | 2 |
| 5 | 2 | 6 | 1 | 2 |
| 6 | 2 | 5 | 1 | 2 |
| 7 | 2 | 4 | 1 | 2 |
| 8 | 2 | 3 | 1 | 3 |
| 9 | 2 | 2 | 1 | 3 |
| 10 | 2 | 1 | 1 | 3 |
| 11 | 2 | 0 | 1 | 3 |
| 12 | 7 (First unit) | 11 | 1 | 1 |
| 13 | 7 (Second unit) | 10 | 1 | 2 |
| 14 | 2 | 9 | 1 | 3 |
| 15 | 2 | 8 | 1 | 1 |
| 16 | 2 | 7 | 1 | 2 |
| 17 | 2 | 6 | 1 | 3 |
| 18 | 2 | 5 | 1 | 1 |
| 19 | 2 | 4 | 1 | 2 |
| 20 | 2 | 3 | 1 | 3 |
| 21 | 2 | 2 | 1 | 1 |
| 22 | 2 | 1 | 1 | 2 |
| 23 | 2 | 0 | 1 | 3 |

The above table is an example, and other indication manners are not excluded.

In an embodiment, when the value T of the fourth indication field is 0 to 9 or is greater than 12 to 21, the value of the PDSCH scheduling delay is 2; when T is 10 or 22, the value of the PDSCH scheduling delay is 7 and corresponds to the first unit; and when T is 11 or 23, the value of the PDSCH scheduling delay is 7 and corresponds to the second unit.

When T is one of 0 to 3, 12, 15, 18 or 21, n8 is 3; when T is one of 4 to 7, 13, 16, 19 or 22, n8 is 2; and when T is one of 8 to 11, 14, 17, 20 or 23, n8 is equal to 1, n5 is equal to mod(T, 12), and n6 is equal to 1.

In an example embodiment, for the RedCap UE, if a PDCCH is detected on slot p and the corresponding DCI is DCI format1_1, the UE determines the slot where the HARQ-ACK transmission is located according to a PDSCH-to-HARQ-timing-indication field in the DCI and transmits an HARQ-ACK, where the value indicated by the PDSCH-to-HARQ-timing-indication field is shown in Table 13.

**Table 13**

| PDSCH-to-HARQ-timing-indication field | | | Number *k* of slots |
|---|---|---|---|
| 1 bit | 2 bits | 3 bits | |
| '0' | '00' | '000' | 1^{st} value provided by *dl-DataToUL-ACK* |
| '1' | '01' | '001' | 2^{nd} value provided by *dl-DataToUL-ACK* |
| | '10' | '010' | 3^{rd} value provided by *dl-DataToUL-ACK* |
| | '11' | '011' | 4^{th} value provided by *dl-DataToUL-ACK* |
| | | '100' | 5^{th} value provided by *dl-DataToUL-ACK* |
| | | '101' | 6^{th} value provided by *dl-DataToUL-ACK* |
| | | '110' | 7^{th} value provided by *dl-DataToUL-ACK* |
| | | '111' | 8^{th} value provided by *dl-DataToUL-ACK* |

| | | | |
|---|---|---|---|
| *Dl-DataToUL-ACK* is higher-layer signaling with the minimum value of 1, or *Dl-DataToUL-ACK* ranges from 1 to 15, or *Dl-DataToUL-ACK* ranges from 1 to 16. | | | |

In an example embodiment, for the RedCap UE, if the PDCCH is detected on slot p, the UE transmits a PUSCH on slot p+k2, where the value of k2 is determined according to the higher-layer signaling and a time domain resource allocation field in the DCI. The time domain resource allocation field indicates a resource index, and the corresponding resource is determined through higher-layer signaling *pusch-TimeFieldAllocationList,* where the minimum value of k2 in PUSCH-TimeFieldResourceAllocation is 1, k2 ranges from 1 to 32, or k2 ranges from 1 to 33.

In an example embodiment, for the RedCap UE, if a random access response (RAR) PDCCH is detected on slot p, the UE transmits a PUSCH on slot p+K2+*Δ*, where the value of K2 is determined through a time domain resource allocation field in the DCI and a preset first table, and the value of *Δ* is determined according to a subcarrier spacing and a preset second table. The time domain resource allocation field indicates a resource index, and the corresponding resource is determined through the preset first table, as shown in Table 14 and Table 15.

**Table 14: Preset first table**

| Row index | PUSCH mapping type | K2 | *S* | *L* |
|---|---|---|---|---|
| 1 | Type A | *j* | 0 | 14 |
| 2 | Type A | *j* | 0 | 12 |
| 3 | Type A | *j* | 0 | 10 |
| 4 | Type B | *j* | 2 | 10 |
| 5 | Type B | *j* | 4 | 10 |
| 6 | Type B | *j* | 4 | 8 |
| 7 | Type B | *j* | 4 | 6 |
| 8 | Type A | *j*+1 | 0 | 14 |
| 9 | Type A | *j*+1 | 0 | 12 |
| 10 | Type A | *j*+1 | 0 | 10 |
| 11 | Type A | *j*+2 | 0 | 14 |
| 12 | Type A | *j*+2 | 0 | 12 |
| 13 | Type A | *j*+2 | 0 | 10 |
| 14 | Type B | *j* | 8 | 6 |
| 15 | Type A | *j*+3 | 0 | 14 |
| 16 | Type A | *j*+3 | 0 | 10 |

**Table 15: Value ofj**

| *µ_{PUSCH}* | *j* |
|---|---|
| 0 | 1 |
| 1 | 1 |
| 2 | 2 |
| 3 | 3 |

The value of *Δ* is determined according to the subcarrier spacing and a preset table.

For the RedCap UE, the minimum delay requirement after the processing delay is relaxed and K2+*Δ* after the processing delay requirement is satisfied are shown in Table 16.

**Table 16**

| *µ_{PUSCH}* | Minimum delay requirement (after relaxing) | K2+*Δ* |
|---|---|---|
| 0 | 43 symbols | 56 symbols |
| 1 | 58 symbols | 70 symbols |
| 2 | 108 symbols | 112 symbols |
| 3 | 168 symbols | 168 symbols |

Therefore, the value of *Δ* is shown in Table 17.

**Table 17: Preset second table**

| *µ_{PUSCH}* | *Δ* |
|---|---|
| 0 | 3 |
| 1 | 4 |
| 2 | 6 |
| 3 | 9 |

In an embodiment, the embodiments of the present application provide an information determination apparatus. The information determination apparatus is suitable for the case of determining a PDSCH scheduling delay. The information determination apparatus may be implemented by software and/or hardware. The apparatus is applied to a first node.

As shown in FIG. 6, the information determination apparatus provided by the embodiments of the present application mainly includes a detection module 61 and a determination module 62.

The detection module 61 is configured to detect an MPDCCH on a first subframe, where the MPDCCH carries DCI, and the DCI includes a signaling field indicating a value of a PDSCH scheduling delay. The determination module 62 is configured to determine a second subframe of PDSCH transmission based on the value of the PDSCH scheduling delay.

In an embodiment, the value of the PDSCH scheduling delay includes a first value and a second value, where the second value includes a first unit and a second unit.

In an embodiment, the second subframe of the PDSCH transmission is determined based on the value of the PDSCH scheduling delay in one of the following manners: if the MPDCCH is detected on a third subframe, the second subframe of the PDSCH transmission is determined according to the first unit corresponding to the value of the PDSCH scheduling delay; or if the MPDCCH is not detected on the third subframe, the second subframe of the PDSCH transmission is determined according to the second unit corresponding to the value of the PDSCH scheduling delay; where the third subframe is the 1^{st} valid downlink subframe after the first subframe.

In an embodiment, the second subframe of the PDSCH transmission is determined based on the value of the PDSCH scheduling delay in one or more of the following manners: if the number of valid downlink subframes between the first subframe and a fourth subframe is a first number, the second subframe of the PDSCH transmission is determined according to the first unit corresponding to the value of the PDSCH scheduling delay; or if the number of valid downlink subframes between the first subframe and the fourth subframe is a second number, the second subframe of the PDSCH transmission is determined according to the second unit corresponding to the value of the PDSCH scheduling delay; where the fourth subframe is the 1^{st} downlink-to-uplink transition subframe after the first subframe.

In an embodiment, the second subframe of the PDSCH transmission is determined based on the value of the PDSCH scheduling delay in one or more of the following manners: when an HARQ process index indicated in the DCI is a first predefined value, the second subframe of the PDSCH transmission is determined according to the first unit corresponding to the value of the PDSCH scheduling delay; when the HARQ process index indicated in the DCI is a second predefined value, the second subframe of the PDSCH transmission is determined according to the second unit corresponding to the value of the PDSCH scheduling delay; when a value of an HARQ-ACK delay indicated in the DCI is greater than or equal to a third number, the second subframe of the PDSCH transmission is determined according to the first unit corresponding to the value of the PDSCH scheduling delay; or when the value of the HARQ-ACK delay indicated in the DCI is less than the third number, the second subframe of the PDSCH transmission is determined according to the second unit corresponding to the value of the PDSCH scheduling delay.

In an embodiment, the case where the DCI includes the signaling field indicating the value of the PDSCH scheduling delay includes a first signaling field in the DCI indicating the value of the PDSCH scheduling delay, where the first signaling field is a signaling field indicating the number of PDSCH repetitions, or the first signaling field is a newly added signaling field.

In an embodiment, the DCI further includes one or more signaling fields indicating a value of an HARQ-ACK feedback delay; and the method further includes that a fifth subframe for transmitting HARQ-ACK response information is determined based on the value of the HARQ-ACK feedback delay.

In an embodiment, the value of the HARQ-ACK feedback delay is determined through an HARQ-ACK feedback delay signaling field and a second signaling field in the DCI.

In an embodiment, the second signaling field is used for indicating the number of invalid subframes between a PDSCH and a corresponding HARQ; or the second signaling field is used for indicating a predetermined value; or the second signaling field is used for indicating a value configured by higher-layer signaling.

In an embodiment, the value of the PDSCH scheduling delay and the value of the HARQ-ACK feedback delay are determined through a PDSCH repetition number signaling field and an HARQ-ACK feedback delay signaling field in the DCI.

In an embodiment, the value of the PDSCH scheduling delay and the value of the HARQ-ACK feedback delay are determined through a third signaling field and an HARQ-ACK feedback delay signaling field in the DCI, where when the third signaling field exists, the PDSCH repetition number signaling field occupies 0 bit.

In an embodiment, the fifth subframe is the 1^{st} valid uplink subframe after the second subframe, a fourth number of valid downlink subframes, a fifth number of physical subframes and a sixth number of valid uplink subframes.

In an embodiment, the fourth number and the sixth number are determined through one or more signaling fields in the DCI, and the fifth number is a preset value.

In an embodiment, the value of the PDSCH scheduling delay, the fourth number and the sixth number are determined through one signaling field in the DCI, and the fifth number is a preset value.

In an embodiment, the fifth subframe is a seventh-number^{th} valid uplink subframe after the second subframe, a fourth number of valid downlink subframes and a fifth number of physical subframes.

In an embodiment, the fourth number and the seventh number are determined through one or more signaling fields in the DCI, and the seventh number is a preset value.

In an embodiment, the value of the PDSCH scheduling delay, the fourth number and the seventh number are determined through one signaling field in the DCI, and the seventh number is a preset value.

In an embodiment, the second subframe determined according to the first unit corresponding to the value of the PDSCH scheduling delay includes: the 2^{nd} physical subframe after the first subframe, two physical subframes, and three valid uplink subframes; and the second subframe determined according to the second unit corresponding to the value of the PDSCH scheduling delay includes: the 3^{rd} physical subframe after the first subframe, one physical subframe and three valid uplink subframes.

In an embodiment, the second subframe determined according to the first unit corresponding to the value of the PDSCH scheduling delay includes: the 1^{st} valid downlink subframe after the first subframe, one valid downlink subframe, one physical subframe, three valid uplink subframes and one physical subframe; and the second subframe determined according to the second unit corresponding to the value of the PDSCH scheduling delay includes: the 2^{nd} valid downlink subframe after the first subframe, one physical subframe, three valid uplink subframes and one physical subframe.

The information determination apparatus provided in this embodiment may perform the information determination method provided in any embodiments of the present application and has function modules and effects corresponding to the performed method. For technical details that are not described in detail in this embodiment, reference may be made to the information determination method provided in any embodiments of the present application.

Units and modules included in the embodiment of the information determination apparatus are just divided according to the functional logic, but the present application is not limited to this division as long as the corresponding functions can be implemented. Additionally, the names of function units are just used to distinguish between each other and are not intended to limit the scope of the present application.

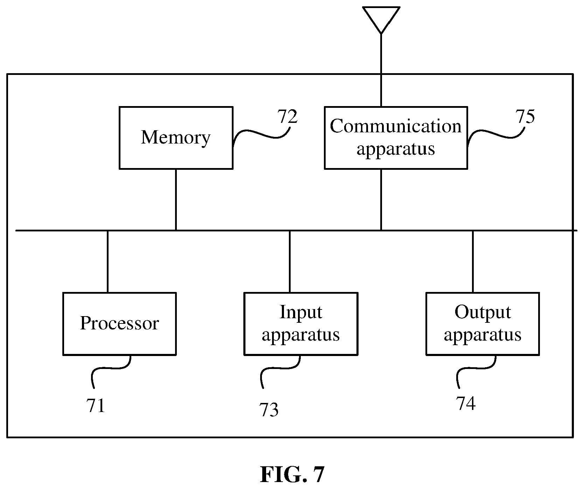

The embodiments of the present application further provide a device. FIG. 7 is a structure diagram of a device according to an embodiment of the present application. As shown in FIG. 7, the device includes a processor 71, a memory 72, an input apparatus 73, an output apparatus 74 and a communication apparatus 75. The number of processors 71 in the device may be one or more, and one processor 71 is illustrated in FIG. 7 as an example. The processor 71, the memory 71, the input apparatus 72 and the output apparatus 124 in the device may be connected to each other via a bus or in other ways, and the connection via a bus is illustrated in FIG. 7 as an example.

As a computer-readable storage medium, the memory 72 may be configured to store software programs, computer-executable programs and modules, for example, program instructions/modules corresponding to the information determination method in the embodiments of the present application. The processor 71 executes software programs, instructions, and modules stored in the memory 72 to perform various function applications and data processing of the device, that is, to implement any methods provided by the embodiments of the present application.

The memory 72 may mainly include a program storage region and a data storage region, where the program storage region may store an operating system and an application program required by at least one function while the data storage region may store data created depending on the use of the device. In addition, the memory 72 may include a high-speed random-access memory and may also include a non-volatile memory such as at least one disk memory, flash memory or another non-volatile solid-state memory. In some examples, the memory 72 may include memories which are remotely disposed with respect to the processor 71, and these remote memories may be connected to the device via a network. Examples of the preceding network include, but are not limited to, the Internet, an intranet, a local area network, a mobile communication network and combinations thereof.

The input apparatus 73 may be configured to receive input digital or character information and generate key signal input related to the user setting and function control of the device. The output apparatus 74 may include a display device such as a display screen.

The communication apparatus 75 may include a receiver and a transmitter. The communication apparatus 75 is configured to perform information transceiving and communication under the control of the processor 71.

In an example embodiment, the embodiments of the present application further provide a storage medium including computer-executable instructions, where the computer-executable instructions are configured to, when executed by a computer processor, perform an information determination method. The method includes the following operations.

An MPDCCH is detected on a first subframe, where the MPDCCH carries DCI, and the DCI includes a signaling field indicating a value of a PDSCH scheduling delay; and a second subframe of PDSCH transmission is determined based on the value of the PDSCH scheduling delay.

As for the storage medium including the computer-executable instruction, which is provided in the embodiments of the present application, the computer-executable instruction may implement not only the operation in the preceding method but also the related operations in the information determination method provided in any embodiments of the present application.

From the preceding description of the embodiments, the present application may be implemented by means of both software and required general-purpose hardware, and also by means of hardware. The technical solutions of the present application may be essentially embodied in the form of a software product. The computer software product may be stored in a computer-readable storage medium such as a floppy disk, a read-only memory (ROM), a random-access memory (RAM), a flash memory, a hard disk, or an optical disk of a computer and includes multiple instructions for causing a computer device (which may be a personal computer, a server or a network device) to perform the method in any embodiments of the present application.

The above are only example embodiments of the present application.

It is to be understood by those skilled in the art that the term user terminal encompasses any suitable type of wireless user device, for example, a mobile phone, a portable data processing apparatus, a portable web browser, or a vehicle-mounted mobile station.

Generally speaking, the various embodiments of the present application may be implemented in hardware or special-purpose circuits, software, logic or any combination thereof. For example, some aspects may be implemented in hardware while other aspects may be implemented in firmware or software executable by a controller, a microprocessor or another calculation apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination thereof. Computer programs may be stored on the memory. The memory may be of any type suitable for a local technical environment and may be implemented using any suitable data storage technology, for example, but not limited to, a read-only memory (ROM), a random-access memory (RAM), and an optical memory device and system (a digital video disc (DVD) or a compact disk (CD)). Computer-readable media may include non-transitory storage media. The data processor may be of any type suitable to the local technical environment such as, but not limited to, a general-purpose computer, a special-purpose computer, a microprocessor, digital signal processing (DSP), an application-specific integrated circuit (ASIC), a field-programmable gate array (FPGA) and a processor based on a multi-core processor architecture.

## Claims

1. An information determination method, being applied to a first node and comprising:
detecting (S11) a machine-type communication physical downlink control channel, MPDCCH, on a first subframe, wherein the MPDCCH carries downlink control information, DCI, and the DCI comprises a signaling field indicating a value of a physical downlink shared channel, PDSCH, scheduling delay;
determining (S12) a second subframe of PDSCH transmission based on the value of the PDSCH scheduling delay; and
receiving the PDSCH transmission according to the second subframe;
wherein determining (S12) the second subframe of the PDSCH transmission based on the value of the PDSCH scheduling delay comprises one of the following manners:
in a case where the MPDCCH is detected on a third subframe, determining the second subframe of the PDSCH transmission according to a first unit corresponding to the value of the PDSCH scheduling delay, and in a case where the MPDCCH is not detected on a third subframe, determining the second subframe of the PDSCH transmission according to a second unit corresponding to the value of the PDSCH scheduling delay, wherein the third subframe is a 1^{st} valid downlink subframe after the first subframe;
in a case where a number of valid downlink subframes between the first subframe and a fourth subframe is a first number, determining the second subframe of the PDSCH transmission according to a first unit corresponding to the value of the PDSCH scheduling delay, and in a case where a number of valid downlink subframes between the first subframe and a fourth subframe is a second number, determining the second subframe of the PDSCH transmission according to a second unit corresponding to the value of the PDSCH scheduling delay, wherein the fourth subframe is a 1^{st} downlink-to-uplink transition subframe after the first subframe;
in a case where a hybrid automatic repeat request, HARQ, process index indicated in the DCI is a first predefined value, determining the second subframe of the PDSCH transmission according to a first unit corresponding to the value of the PDSCH scheduling delay, and in a case where an HARQ process index indicated in the DCI is a second predefined value, determining the second subframe of the PDSCH transmission according to a second unit corresponding to the value of the PDSCH scheduling delay; or
in a case where a value of a hybrid automatic repeat request acknowledgement, HARQ-ACK, delay indicated in the DCI is greater than or equal to a third number, determining the second subframe of the PDSCH transmission according to a first unit corresponding to the value of the PDSCH scheduling delay, and in a case where a value of an HARQ-ACK delay indicated in the DCI is less than a third number, determining the second subframe of the PDSCH transmission according to a second unit corresponding to the value of the PDSCH scheduling delay;
wherein the second subframe determined according to the first unit corresponding to the value of the PDSCH scheduling delay comprises: a 2^{nd} physical subframe after the first subframe, two physical subframes and three valid uplink subframes; and the second subframe determined according to the second unit corresponding to the value of the PDSCH scheduling delay comprises: a 3^{rd} physical subframe after the first subframe, one physical subframe and three valid uplink subframes; or
wherein the second subframe determined according to the first unit corresponding to the value of the PDSCH scheduling delay comprises: a 1^{st} valid downlink subframe after the first subframe, one valid downlink subframe, one physical subframe, three valid uplink subframes and one physical subframe; and the second subframe determined according to the second unit corresponding to the value of the PDSCH scheduling delay comprises: a 2^{nd} valid downlink subframe after the first subframe, one physical subframe, three valid uplink subframes and one physical subframe.

2. The method of claim 1, wherein the value of the PDSCH scheduling delay comprises a first value and a second value, wherein the second value comprises a first unit and a second unit.

3. The method of claim 1, wherein the DCI comprising the signaling field indicating the value of the PDSCH scheduling delay comprises:
a first signaling field in the DCI indicating the value of the PDSCH scheduling delay;
wherein the first signaling field is a signaling field indicating a number of PDSCH repetitions, or the first signaling field is a newly added signaling field, or in a case where the first signaling field exists, the first signaling field indicates that a signaling field of a number of PDSCH repetitions occupies 0 bit.

4. The method of claim 1, wherein the DCI further comprises at least one signaling field indicating a value of an HARQ-ACK feedback delay; and
the method further comprises:
determining a fifth subframe for transmitting HARQ-ACK response information based on the value of the HARQ-ACK feedback delay.

5. The method of claim 4, wherein the value of the HARQ-ACK feedback delay is determined through an HARQ-ACK feedback delay signaling field in the DCI and a second signaling field in the DCI.

6. The method of claim 5, wherein the second signaling field is used for indicating a number of invalid subframes between a PDSCH and an HARQ corresponding to the PDSCH; or the second signaling field is used for indicating a predetermined value; or the second signaling field is used for indicating a value configured by higher-layer signaling.

7. The method of claim 4, wherein the value of the PDSCH scheduling delay and the value of the HARQ-ACK feedback delay are determined through a PDSCH repetition number signaling field in the DCI and an HARQ-ACK feedback delay signaling field in the DCI.

8. The method of claim 4, wherein the value of the PDSCH scheduling delay and the value of the HARQ-ACK feedback delay are determined through a third signaling field in the DCI and an HARQ-ACK feedback delay signaling field in the DCI, wherein in a case where the third signaling field exists, a PDSCH repetition number signaling field occupies 0 bit.

9. The method of claim 4, wherein the fifth subframe is a 1^{st} valid uplink subframe after the second subframe, a fourth number of valid downlink subframes, a fifth number of physical subframes and a sixth number of valid uplink subframes.

10. The method of claim 9, wherein the fourth number and the sixth number are determined through at least one signaling field in the DCI, and the fifth number is a preset value.

11. The method of claim 9, wherein the value of the PDSCH scheduling delay, the fourth number and the sixth number are determined through one signaling field in the DCI, and the fifth number is a preset value.

12. The method of claim 4, wherein the fifth subframe is a seventh-number^{th} valid uplink subframe after the second subframe, a fourth number of valid downlink subframes and a fifth number of physical subframes.

13. The method of claim 12, wherein the fourth number and the seventh number are determined through at least one signaling field in the DCI, and the fifth number is a preset value; or
the value of the PDSCH scheduling delay, the fourth number and the seventh number are determined through one signaling field in the DCI, and the fifth number is a preset value.

14. A device, comprising:
at least one processor; and
a memory configured to store at least one program;
wherein the at least one program, when executed by the at least one processor, causes the at least one processor to perform the information determination method of any one of claims 1 to 13.

15. A storage medium storing a computer program, wherein the computer program, when executed by a processor, performs the information determination method of any one of claims 1 to 13.

## Patentansprüche

1. Informationsbestimmungsverfahren, angewandt auf einen ersten Knoten und umfassend:
Detektieren (S11) eines physikalischen Downlink-Steuerkanals für Maschinentypkommunikation, MPDCCH, auf einem ersten Unterrahmen, wobei der MPDCCH Downlink-Steuerungsinformationen, DCI, trägt und die DCI ein Signalisierungsfeld umfasst, das einen Wert einer Scheduling-Verzögerung eines physikalischen gemeinsam genutzten Downlink-Kanals, PDSCH, angibt;
Bestimmen (S12) eines zweiten Unterrahmens der PDSCH-Übertragung basierend auf dem Wert der PDSCH-Scheduling-Verzögerung; und
Empfangen der PDSCH-Übertragung gemäß dem zweiten Unterrahmen;
wobei Bestimmen (S12) des zweiten Unterrahmens der PDSCH-Übertragung basierend auf dem Wert der PDSCH-Scheduling-Verzögerung eine der folgenden Weisen umfasst:
in einem Fall, in dem der MPDCCH auf einem dritten Unterrahmen detektiert wird, Bestimmen des zweiten Unterrahmens der PDSCH-Übertragung gemäß einer ersten Einheit, die dem Wert der PDSCH-Scheduling-Verzögerung entspricht, und in einem Fall, in dem der MPDCCH nicht auf einem dritten Unterrahmen detektiert wird, Bestimmen des zweiten Unterrahmens der PDSCH-Übertragung gemäß einer zweiten Einheit, die dem Wert der PDSCH-Scheduling-Verzögerung entspricht, wobei der dritte Unterrahmen ein 1. gültiger Downlink-Unterrahmen nach dem ersten Unterrahmen ist;
in einem Fall, in dem eine Anzahl gültiger Downlink-Unterrahmen zwischen dem ersten Unterrahmen und einem vierten Unterrahmen eine erste Anzahl ist, Bestimmen des zweiten Unterrahmens der PDSCH-Übertragung gemäß einer ersten Einheit, die dem Wert der PDSCH-Scheduling-Verzögerung entspricht, und in einem Fall, in dem eine Anzahl gültiger Downlink-Unterrahmen zwischen dem ersten Unterrahmen und einem vierten Unterrahmen eine zweite Anzahl ist, Bestimmen des zweiten Unterrahmens der PDSCH-Übertragung gemäß einer zweiten Einheit, die dem Wert der PDSCH-Scheduling-Verzögerung entspricht, wobei der vierte Unterrahmen ein 1. Downlink-zu-Uplink-Übergangsunterrahmen nach dem ersten Unterrahmen ist;
in einem Fall, in dem ein HARQ-Prozessindex einer hybriden automatischen Wiederholungsanforderung, IIARQ, der in der DCI angegeben ist, ein erster vordefinierter Wert ist, Bestimmen des zweiten Unterrahmens der PDSCH-Übertragung gemäß einer ersten Einheit, die dem Wert der PDSCH-Scheduling-Verzögerung entspricht, und in einem Fall, in dem ein in der DCI angegebener HARQ-Prozessindex ein zweiter vordefinierter Wert ist, Bestimmen des zweiten Unterrahmens der PDSCH-Übertragung gemäß einer zweiten Einheit, die dem Wert der PDSCH-Scheduling-Verzögerung entspricht; oder
in einem Fall, in dem ein Wert einer in der DCI angegebenen Verzögerung einer hybriden automatischen Wiederholungsanforderungsbestätigung, HARQ-ACK-Verzögerung, größer als oder gleich einer dritten Anzahl ist, Bestimmen des zweiten Unterrahmens der PDSCH-Übertragung gemäß einer ersten Einheit, die dem Wert der PDSCH-Scheduling-Verzögerung entspricht, und in einem Fall, in dem ein Wert einer in der DCI angegebenen HARQ-ACK-Verzögerung kleiner als eine dritte Anzahl ist, Bestimmen des zweiten Unterrahmens der PDSCH-Übertragung gemäß einer zweiten Einheit, die dem Wert der PDSCH-Scheduling-Verzögerung entspricht;
wobei der gemäß der ersten Einheit, die dem Wert der PDSCH-Scheduling-Verzögerung entspricht, bestimmte zweite Unterrahmen umfasst: einen 2. physikalischen Unterrahmen nach dem ersten Unterrahmen, zwei physikalische Unterrahmen und drei gültige Uplink-Unterrahmen; und der gemäß der zweiten Einheit, die dem Wert der PDSCH-Scheduling-Verzögerung entspricht, bestimmte zweite Unterrahmen umfasst: einen 3. physikalischen Unterrahmen nach dem ersten Unterrahmen, einen physikalischen Unterrahmen und drei gültige Uplink-Unterrahmen; oder
wobei der gemäß der ersten Einheit, die dem Wert der PDSCH-Scheduling-Verzögerung entspricht, bestimmte zweite Unterrahmen umfasst: einen 1. gültigen Downlink-Unterrahmen nach dem ersten Unterrahmen, einen gültigen Downlink-Unterrahmen, einen physikalischen Unterrahmen, drei gültige Uplink-Unterrahmen und einen physikalischen Unterrahmen; und der gemäß der zweiten Einheit, die dem Wert der PDSCH-Scheduling-Verzögerung entspricht, bestimmte zweite Unterrahmen umfasst: einen 2. gültigen Downlink-Unterrahmen nach dem ersten Unterrahmen, einen physikalischen Unterrahmen, drei gültige Uplink-Unterrahmen und einen physikalischen Unterrahmen.

2. Verfahren nach Anspruch 1, wobei der Wert der PDSCH-Scheduling-Verzögerung einen ersten Wert und einen zweiten Wert umfasst, wobei der zweite Wert eine erste Einheit und eine zweite Einheit umfasst.

3. Verfahren nach Anspruch 1, wobei die DCI, die das Signalisierungsfeld umfasst, das den Wert der PDSCH-Scheduling-Verzögerung angibt, umfasst:
ein erstes Signalisierungsfeld in der DCI, das den Wert der PDSCH-Scheduling-Verzögerung angibt;
wobei das erste Signalisierungsfeld ein Signalisierungsfeld ist, das eine Anzahl von PDSCH-Wiederholungen angibt, oder das erste Signalisierungsfeld ein neu hinzugefügtes Signalisierungsfeld ist, oder in einem Fall, in dem das erste Signalisierungsfeld existiert, das erste Signalisierungsfeld angibt, dass ein Signalisierungsfeld einer Anzahl von PDSCH-Wiederholungen 0 Bit belegt.

4. Verfahren nach Anspruch 1, wobei die DCI ferner mindestens ein Signalisierungsfeld umfasst, das einen Wert einer HARQ-ACK-Rückmeldungsverzögerung angibt; und
das Verfahren ferner umfasst:
Bestimmen eines fünften Unterrahmens zum Übertragen von HARQ-ACK-Antwortinformationen basierend auf dem Wert der HARQ-ACK-Rückmeldungsverzögerung.

5. Verfahren nach Anspruch 4, wobei der Wert der HARQ-ACK-Rückmeldungsverzögerung durch ein HARQ-ACK-Rückmeldungsverzögerungssignalisierungsfeld in der DCI und ein zweites Signalisierungsfeld in der DCI bestimmt wird.

6. Verfahren nach Anspruch 5, wobei das zweite Signalisierungsfeld zum Angeben einer Anzahl ungültiger Unterrahmen zwischen einem PDSCH und einem dem PDSCH entsprechenden HARQ verwendet wird; oder das zweite Signalisierungsfeld zum Angeben eines vorbestimmten Werts verwendet wird; oder das zweite Signalisierungsfeld zum Angeben eines durch Signalisierung höherer Schichten konfigurierten Werts verwendet wird.

7. Verfahren nach Anspruch 4, wobei der Wert der PDSCH-Scheduling-Verzögerung und der Wert der HARQ-ACK-Rückmeldungsverzögerung durch ein PDSCH-Wiederholungsanzahlsignalisierungsfeld in der DCI und ein HARQ-ACK-Rückmeldungsverzögerungssignalisierungsfeld in der DCI bestimmt werden.

8. Verfahren nach Anspruch 4, wobei der Wert der PDSCH-Scheduling-Verzögerung und der Wert der HARQ-ACK-Rückmeldungsverzögerung durch ein drittes Signalisierungsfeld in der DCI und ein HARQ-ACK-Rückmeldungsverzögerungssignalisierungsfeld in der DCI bestimmt werden, wobei in einem Fall, in dem das dritte Signalisierungsfeld existiert, ein PDSCH-Wiederholungsanzahlsignalisierungsfeld 0 Bit belegt.

9. Verfahren nach Anspruch 4, wobei der fünfte Unterrahmen ein 1. gültiger Uplink-Unterrahmen nach dem zweiten Unterrahmen, einer vierten Anzahl gültiger Downlink-Unterrahmen, einer fünften Anzahl physikalischer Unterrahmen und einer sechsten Anzahl gültiger Uplink-Unterrahmen ist.

10. Verfahren nach Anspruch 9, wobei die vierte Anzahl und die sechste Anzahl durch mindestens ein Signalisierungsfeld in der DCI bestimmt werden und die fünfte Anzahl ein voreingestellter Wert ist.

11. Verfahren nach Anspruch 9, wobei der Wert der PDSCH-Scheduling-Verzögerung, die vierte Anzahl und die sechste Anzahl durch ein Signalisierungsfeld in der DCI bestimmt werden und die fünfte Anzahl ein voreingestellter Wert ist.

12. Verfahren nach Anspruch 4, wobei der fünfte Unterrahmen ein gültiger Uplink-Unterrahmen der siebten Anzahl^{th} nach dem zweiten Unterrahmen, einer vierten Anzahl gültiger Downlink-Unterrahmen und einer fünften Anzahl physikalischer Unterrahmen ist.

13. Verfahren nach Anspruch 12, wobei die vierte Anzahl und die siebte Anzahl durch mindestens ein Signalisierungsfeld in der DCI bestimmt werden und die fünfte Anzahl ein voreingestellter Wert ist; oder
der Wert der PDSCH-Scheduling-Verzögerung, die vierte Anzahl und die siebte Anzahl durch ein Signalisierungsfeld in der DCI bestimmt werden und die fünfte Anzahl ein voreingestellter Wert ist.

14. Vorrichtung, umfassend:
mindestens einen Prozessor; und
einen Speicher, der konfiguriert ist, mindestens ein Programm zu speichern;
wobei das mindestens eine Programm, wenn es durch den mindestens einen Prozessor ausgeführt wird, den mindestens einen Prozessor veranlasst, das Informationsbestimmungsverfahren nach einem der Ansprüche 1 bis 13 durchzuführen.

15. Speichermedium, das ein Computerprogramm speichert, wobei das Computerprogramm, wenn es von einem Prozessor ausgeführt wird, das Informationsbestimmungsverfahren nach einem der Ansprüche 1 bis 13 durchführt.

## Revendications

1. Procédé de détermination d'informations, étant appliqué à un premier nœud et comprenant :
la détection (S11) d'un canal de commande de liaison descendante physique de communication de type machine, MPDCCH, sur une première sous-trame, dans lequel le MPDCCH transporte des informations de commande de liaison descendante, DCI, et les DCI comprennent un champ de signalisation indiquant une valeur d'un délai de planification de canal partagé de liaison descendante physique, PDSCH ;
la détermination (S12) d'une deuxième sous-trame de transmission PDSCH sur la base de la valeur du délai de planification PDSCH ; et
la réception de la transmission PDSCH conformément à la deuxième sous-trame ;
dans lequel la détermination (S12) de la deuxième sous-trame de la transmission PDSCH sur la base de la valeur du délai de planification PDSCH comprend l'un des modes suivants :
dans un cas où le MPDCCH est détecté sur une troisième sous-trame, la détermination de la deuxième sous-trame de la transmission PDSCH selon une première unité correspondant à la valeur du délai de planification PDSCH, et dans un cas où le MPDCCH n'est pas détecté sur une troisième sous-trame, la détermination de la deuxième sous-trame de la transmission PDSCH selon une seconde unité correspondant à la valeur du délai de planification PDSCH, dans lequel la troisième sous-trame est une première sous-trame de liaison descendante valide après la première sous-trame ;
dans un cas où un nombre de sous-trames de liaison descendante valides entre la première sous-trame et la quatrième sous-trame est un premier nombre, la détermination de la deuxième sous-trame de la transmission PDSCH selon une première unité correspondant à la valeur du délai de planification PDSCH, et dans un cas où un nombre de sous-trames de liaison descendante valides entre la première sous-trame et une quatrième sous-trame est un deuxième nombre, la détermination de la deuxième sous-trame de la transmission PDSCH selon une seconde unité correspondant à la valeur du délai de planification PDSCH, dans lequel la quatrième sous-trame est une première sous-trame de transition liaison descendante-liaison montante après la première sous-trame ;
dans un cas où un indice de processus de requête de répétition automatique hybride, IIARQ, indiqué dans les DCI est une première valeur prédéfinie, la détermination de la deuxième sous-trame de la transmission PDSCH selon une première unité correspondant à la valeur du délai de planification PDSCH, et dans un cas où l'indice de processus HARQ indiqué dans les DCI est une seconde valeur prédéfinie, la détermination de la deuxième sous-trame de la transmission PDSCH selon une seconde unité correspondant à la valeur du délai de planification PDSCH ; ou
dans un cas où une valeur d'un délai d'accusé de réception de requête de répétition automatique hybride, HARQ-ACK, indiqué dans les DCI est supérieure ou égale à un troisième nombre, la détermination de la deuxième sous-trame de la transmission PDSCH selon une première unité correspondant à la valeur du délai de planification PDSCH, et dans un cas où une valeur d'un délai HARQ-ACK indiqué dans les DCI est inférieure à un troisième nombre, la détermination de la deuxième sous-trame de la transmission PDSCH selon une seconde unité correspondant à la valeur du délai de planification PDSCH ;
dans lequel la deuxième sous-trame déterminée selon la première unité correspondant à la valeur du délai de planification PDSCH comprend : une deuxième sous-trame physique après la première sous-trame, deux sous-trames physiques et trois sous-trames de liaison montante valides ; et la deuxième sous-trame déterminée selon la seconde unité correspondant à la valeur du délai de planification PDSCH comprend : une troisième sous-trame physique après la première sous-trame, une sous-trame physique et trois sous-trames de liaison montante valides ; ou
dans lequel la deuxième sous-trame déterminée selon la première unité correspondant à la valeur du délai de planification PDSCH comprend : une première sous-trame de liaison descendante valide après la première sous-trame, une sous-trame physique, trois sous-trames de liaison montante valides et une sous-trame physique ; et la deuxième sous-trame déterminée selon la seconde unité correspondant à la valeur du délai de planification PDSCH comprend : une deuxième sous-trame de liaison descendante valide après la première sous-trame, une sous-trame physique, trois sous-trames de liaison montante valides et une sous-trame physique.

2. Procédé selon la revendication 1, dans lequel la valeur du délai de planification PDSCH comprend une première valeur et une seconde valeur, dans lequel la seconde valeur comprend une première unité et une seconde unité.

3. Procédé selon la revendication 1, dans lequel les DCI comprenant le champ de signalisation indiquant la valeur du délai de planification PDSCH comprennent :
un premier champ de signalisation dans les DCI indiquant la valeur du délai de planification PDSCH ;
dans lequel le premier champ de signalisation est un champ de signalisation indiquant un nombre de répétitions PDSCH, ou le premier champ de signalisation est un champ de signalisation nouvellement ajouté, ou dans un cas où le premier champ de signalisation existe, le premier champ de signalisation indique qu'un champ de signalisation d'un nombre de répétitions PDSCH occupe 0 bit.

4. Procédé selon la revendication 1, dans lequel les DCI comprennent en outre au moins un champ de signalisation indiquant une valeur d'un délai de retour HARQ-ACK ; et
le procédé comprend en outre :
la détermination d'une cinquième sous-trame pour la transmission d'informations de réponse HARQ-ACK sur la base de la valeur du délai de retour HARQ-ACK.

5. Procédé selon la revendication 4, dans lequel la valeur du délai de retour HARQ-ACK est déterminée à travers un champ de signalisation de délai de retour HARQ-ACK dans les DCI et un deuxième champ de signalisation dans les DCI.

6. Procédé selon la revendication 5, dans lequel le deuxième champ de signalisation est utilisé pour indiquer un nombre de sous-trames invalides entre un PDSCH et un HARQ correspondant au PDSCH ; ou le deuxième champ de signalisation est utilisé pour indiquer une valeur prédéterminée ; ou le deuxième champ de signalisation est utilisé pour indiquer une valeur configurée par une signalisation de couche supérieure.

7. Procédé selon la revendication 4, dans lequel la valeur du délai de planification PDSCH et la valeur du délai de retour HARQ-ACK sont déterminées à travers un champ de signalisation de nombre de répétitions PDSCH dans les DCI et un champ de signalisation de délai de retour HARQ-ACK dans les DCI.

8. Procédé selon la revendication 4, dans lequel la valeur du délai de planification PDSCH et la valeur du délai de retour HARQ-ACK sont déterminées à travers un troisième champ de signalisation dans les DCI et un champ de signalisation de délai de retour HARQ-ACK dans les DCI, dans lequel, dans un cas où le troisième champ de signalisation existe, un champ de signalisation de nombre de répétitions PDSCH occupe 0 bit.

9. Procédé selon la revendication 4, dans lequel la cinquième sous-trame est une première sous-trame de liaison montante valide après la deuxième sous-trame, un quatrième nombre de sous-trames de liaison descendante valides, un cinquième nombre de sous-trames physiques et un sixième nombre de sous-trames de liaison montante valides.

10. Procédé selon la revendication 9, dans lequel le quatrième nombre et le sixième nombre sont déterminés à travers au moins un champ de signalisation dans les DCI, et le cinquième nombre est une valeur prédéfinie.

11. Procédé selon la revendication 9, dans lequel la valeur du délai de planification PDSCH, le quatrième nombre et le sixième nombre sont déterminés à travers un champ de signalisation dans les DCI, et le cinquième nombre est une valeur prédéfinie.

12. Procédé selon la revendication 4, dans lequel la cinquième sous-trame est une n7^{ième} sous-trame de liaison montante valide après la deuxième sous-trame, un quatrième nombre de sous-trames de liaison descendante valides et un cinquième nombre de sous-trames physiques.

13. Procédé selon la revendication 12, dans lequel le quatrième nombre et le septième nombre sont déterminés à travers au moins un champ de signalisation dans les DCI, et le cinquième nombre est une valeur prédéfinie ; ou
la valeur du délai de planification PDSCH, le quatrième nombre et le septième nombre sont déterminés à travers un champ de signalisation dans les DCI, et le cinquième nombre est une valeur prédéfinie.

14. Dispositif, comprenant :
au moins un processeur ; et
une mémoire configurée pour stocker au moins un programme ;
dans lequel l'au moins un programme, lorsqu'il est exécuté par l'au moins un processeur, amène l'au moins un processeur à réaliser le procédé de détermination d'informations selon l'une quelconque des revendications 1 à 13.

15. Support de stockage stockant un programme informatique, dans lequel le programme informatique, lorsqu'il est exécuté par un processeur, réalise le procédé de détermination d'informations selon l'une quelconque des revendications 1 à 13.
